# EUROPEAN PATENT SPECIFICATION

(11) **EP 1 569 294 B1**
(45) Date of publication and mention of the grant of the patent: **31.08.2011**
(21) Application number: 05250969.2
(22) Date of filing: 21.02.2005
(51) Int. Cl.: H01M 8/10, C08J 5/22, C09D 175/08, H01B 1/12

(54) **Electrolyte membrane-forming liquid curable resin composition, and preparation of electrolyte membrane and electrolyte membrane/electrode assembly**
Elektrolytmembranformende flüssige härtbare Harzzusammensetzung und Herstellung von Elekrolytmembran und Elektrolytmembran/Elektroden-Einheit
Composition de resine liquide durcissable et fabrication de membrane electrolyte et ensemble membrane electrolyte/électrode

(30) Priority: 20.02.2004 JP 2004044414
(43) Date of publication of application: 31.08.2005
(73) Proprietor: Shin-Etsu Chemical Co., Ltd., Chiyoda-ku, Tokyo (JP)
(72) Inventor: Ohba, Toshio, Shin-Etsu Chemicals Co. Ltd., Annaka-shi, Gunma-ken (JP); Takahashi, Mitsuhito, Shin-Etsu Chemicals Co. Ltd., Annaka-shi, Gunma-ken (JP); Itoh, Atsuo, Shin-Etsu Chemical Co. Ltd., Tokyo (JP)
(74) Representative: Stoner, Gerard Patrick

(56) References cited:
- WO-A-03/081706
- GB-A- 2 380 055
- US-A1- 2003 168 404

## Description

This invention relates to solid polymer electrolyte fuel cells. More particularly, it relates to a liquid curable resin composition for forming an electrolyte membrane, a method for preparing an electrolyte membrane, and a method for preparing an electrolyte membrane/electrode assembly.

### BACKGROUND

Fuel cells using solid polymer electrolyte (SPE) membranes are expected to find widespread use as power supplies for electric cars and small-size auxiliary power supplies due to a low operating temperature below 100°C and a high energy density. In such SPE fuel cells, constituent technologies relating to electrolyte membranes, platinum base catalysts, gas diffusion electrodes, and electrolyte membrane/electrode assemblies are important. Among others, the technologies relating to electrolyte membranes and electrolyte membrane/electrode assemblies are most important because they largely govern the performance of fuel cells.

In SPE fuel cells, an electrolyte membrane on its opposite sides is combined with a fuel diffusion electrode and an air diffusion electrode so that the electrolyte membrane and the electrodes form a substantially integral structure. Then the electrolyte membrane not only acts as an electrolyte for conducting protons, but also plays the role of a diaphragm for preventing a fuel (such as hydrogen or methanol) from directly mixing with an oxidant (such as air or oxygen) even under applied pressure.

From the electrolyte aspect, the electrolyte membrane is required to have a high ion (proton) transfer velocity, a high ion exchange capacity, and a high and constant water-retaining ability enough to maintain a low electric resistance. The role of a diaphragm requires the electrolyte membrane to have a high dynamic strength, dimensional stability, chemical stability during long-term service, and no extra permeation of hydrogen gas or methanol as the fuel and oxygen gas as the oxidant.

Electrolyte membranes used in early SPE fuel cells were ion exchange membranes of hydrocarbon resins obtained through copolymerization of styrene with divinyl benzene. These electrolyte membranes, however, lacked practical usefulness due to very low durability. Thereafter, perfluorosulfonic acid/PTFE copolymer membranes developed by E.I. duPont and commercially available under the trade mark "Nafion" have been widely used instead.

One problem associated with conventional fluororesin base electrolyte membranes as typified by Nafion is an increased cost because their manufacture starts from the synthesis of monomers and requires a number of steps. This becomes a substantial bar against practical applications. With respect to the thickness of electrolyte membranes, as the membrane becomes thinner, proton conduction becomes easier and hence, fuel cells provide better power generation characteristics. Thin electrolyte membranes, however, can be ruptured when an electrolyte membrane and electrodes are pressed together at elevated temperature to enhance the bond therebetween.

Efforts have been made to develop inexpensive electrolyte membranes that can replace the Nafion and similar membranes. A number of electrolyte membranes under study are described in Viral Mehta, Journal of Power Sources, 114 (2003), pp. 32-53. However, these electrolyte membranes after their film formation are joined to electrodes by pressing at elevated temperatures, which leaves problems of possible rupture of membranes and complex steps. The joining under heat and pressure does not always achieve a sufficient adhesion.

To improve the level of productivity and adhesion, JP-A 2003-203646 proposes to apply a solution of an electrolyte membrane in a solvent onto an electrode, and press bond the assembly with the solvent partially left therein. Since the electrolyte membrane has not been cured, only low adhesion is achieved.

JP-A 2003-217342 and JP-A 2003-217343 disclose crosslinking of electrolyte membranes for improved durability. Since solid electrolyte membranes are crosslinked, subsequent press bonding at elevated temperatures is necessary to fabricate an electrolyte membrane/electrode assembly.

Also, WO 03/033576 discloses to control the fuel permeability of an electrolyte membrane by impregnating the electrolyte membrane with a non-electrolyte monomer, followed by polymerization. The non-electrolyte monomer is cured. However, since the membrane subject to impregnation is in solid form, subsequent press bonding at elevated temperatures is necessary.

An object of the present invention is to provide liquid curable resin compositions for forming electrolyte membranes having excellent ionic conduction; a method for preparing electrolyte membranes at a high level of productivity; and a method for preparing electrolyte membrane/electrode assemblies in which an electrolyte membrane and electrodes can be tightly bonded without a need for hot pressing.

The inventors have discovered that by applying a liquid curable resin composition according to claim 1 comprising a compound containing at least one ethylenically unsaturated group and at least one ion conductive group or precursor group thereof in a molecule and having a viscosity of up to 100,000 mPa·s at 25°C onto a substrate to a build-up of up to 200 µm and curing the applied resin composition through heating and/or UV or EB irradiation, a cured film is obtained which has excellent ionic conduction, satisfactory elongation and strength and is thus useful as the electrolyte membrane for fuel cells. The cured film can be prepared in an efficient manner.

Additionally, by applying the liquid curable resin composition onto a first catalyzed electrode, curing the applied resin composition to form a cured film by heating and/or UV or EB irradiation, and disposing a second catalyzed electrode contiguous to the cured film; or by applying the liquid curable resin composition onto a first catalyzed electrode, disposing a second catalyzed electrode contiguous to the applied resin composition, and curing the applied resin composition to form a cured film by heating and/or UV or EB irradiation, an electrolyte membrane/electrode assembly is prepared in an industrially advantageous manner in which an electrolyte membrane and electrodes are tightly bonded without a need for hot pressing and which is useful for fuel cells.

In a first aspect, the invention provides a liquid curable resin composition for forming an electrolyte membrane, comprising a compound having at least one ethylenically unsaturated group and at least one ion conductive group or precursor group thereof in a molecule. The composition has a viscosity of up to 100,000 mPa·s at 25°C.

In one embodiment, a liquid curable resin composition for forming an electrolyte membrane, comprises a monomer containing at least one ethylenically unsaturated group and at least one ion conductive group or precursor group thereof in a molecule and having a molecular weight of less than 1,000, and an oligomer containing at least two reactive groups in a molecule and having a number average molecular weight of at least 1,000, in a weight ratio of from 10/90 to 90/10. The composition has a viscosity of up to 100,000 mPa·s at 25°C.

In a preferred embodiment, the ion conductive group is a sulfonic acid group.

In a second aspect, the invention provides a method for preparing an electrolyte membrane using the liquid curable resin composition defined above. The method in one embodiment involves the steps of applying the liquid curable resin composition onto a substrate to a build-up of up to 200 µm, and curing the applied resin composition to form a cured film by heating and/or ultraviolet (UV) or electron beam (EB) irradiation. When a monomer having a precursor group of ion conductive group is used, the method further involves the step of converting the precursor groups to ion conductive groups.

In a third aspect, the invention provides a method for preparing an electrolyte membrane/electrode assembly, comprising the steps of applying the liquid curable resin composition onto a first electrode having a catalyst borne thereon, curing the applied resin composition to form a cured film by heating and/or ultraviolet or electron beam irradiation, and disposing a second electrode having a catalyst borne thereon contiguous to the cured film; or the steps of applying the liquid curable resin composition onto a first electrode having a catalyst borne thereon, disposing a second electrode having a catalyst borne thereon contiguous to the applied resin composition, and curing the applied resin composition to form a cured film by heating and/or ultraviolet or electron beam irradiation.

The liquid curable resin composition of the present invention cures with heat and/or radiation into a cured film (i.e., electrolyte membrane) having excellent ionic conduction. There are obtained an electrolyte membrane and an electrolyte membrane/electrode assembly for use in fuel cells which satisfy cell-related properties including ionic conduction and film strength as well as productivity at the same time. The electrolyte membrane produced by the method of the invention can have a low thickness which leads to effective ionic conduction and is thus quite useful as the solid polymer electrolyte membrane in fuel cells and especially direct methanol-air fuel cells.

Use of cured films of the compositions as electrolyte membranes, methods of making electrolyte membranes including curing such compositions on substrates, and methods of making electrolyte membrane/electrode assemblies or cells comprising curing such compositions contacting one or two electrodes, are further aspects as are the corresponding products.

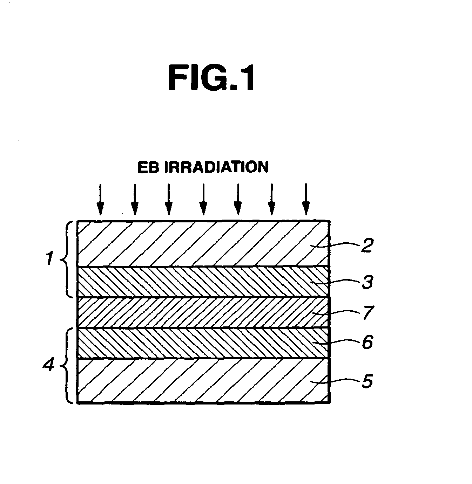

The only figure, FIG. 1 is a cross-sectional view illustrating one typical method of preparing an electrolyte membrane/electrode assembly according to the invention.

The liquid curable resin composition of the invention for forming an electrolyte membrane comprises a compound having at least one ethylenically unsaturated group and at least one ion conductive group or precursor group thereof in a molecule, and preferably, an oligomer having at least two reactive groups in a molecule.

Examples of the compound having at least one ethylenically unsaturated group and at least one ion conductive group or precursor group thereof such as carboxylic acid group (-COOH) or sulfonic acid group (-SO₃H) in a molecule include, but are not limited to, (meth)acrylic acid, sulfonic acid group-containing monomers such as styrenesulfonic acid, allylbenzenesulfonic acid, allyloxybenzenesulfonic acid, vinylsulfonic acid, fluorovinylsulfonic acid, perfluoroalkylsulfonic acid fluorovinyl ethers, and perfluorovinyl ether sulfonic acid, and alkali metal salts thereof, and glycidyl (meth)acrylate monomers.

Of these, those monomers having a molecular weight of less than 1,000, and especially 200 to 500 are desirable because the cured films therefrom have higher ionic (proton) conduction. It is noted that those compounds having a sulfonic acid group or a precursor group of sulfonic acid group as the ion conductive group are preferred for higher ionic conductivity. Suitable precursor groups of sulfonic acid groups include, but are not limited to, sulfonic acid metal salts, and a glycidyl group which forms a sulfonic acid metal salt with sodium sulfite or the like.

Examples of the oligomer having at least two reactive groups in a molecule include polyethylene glycol di(meth)acrylate, polyethylene glycol, polypropylene glycol, polytetramethylene glycol, polyether polyacrylates such as diurethane (meth)acrylate of polybutylene glycol, polyester polyacrylates, (meth)acryloxy group-containing organopolysiloxanes, vinyl group-containing organopolysiloxanes, and alkoxy group-containing organopolysiloxanes. Those oligomers having a number average molecular weight of at least 1,000, especially 1,000 to 4,000 are desirable because the resulting composition has better applicability and curability.

In the liquid curable resin composition, the compound or monomer having at least one ethylenically unsaturated group and at least one ion conductive group or precursor group thereof in a molecule, and the oligomer having at least two reactive groups in a molecule are typically present in a weight ratio of monomer/oligomer of from 10/90 to 90/10, desirably from 20/80 to 80/20, and more desirably from 30/70 to 70/30. A monomer/oligomer weight ratio of less than 10/90 may lead to a lowering of ionic conductivity whereas a ratio of more than 90/10 may detract from curability.

In the liquid curable resin composition, a monomer not containing an ion conductive group or a precursor group thereof may be included for the purposes of tailoring the elongation, strength, Young's modulus, and glass transition temperature of a cured film, or the like. Suitable ion conductive group-free monomers include styrene, t-butylstyrene, n-lauryl acrylate, 2-ethylhexyl acrylate, n-hexyl acrylate, isooctyl acrylate, 2-phenoxyethyl acrylate, and 2-ethoxyethyl acrylate. They may be used in combination with the ion conductive group-containing monomer as long as they do not compromise the ionic conduction of a cured film.

In the liquid curable resin composition, heteropolyacids such as phospho-tungstate may be added for the purpose of improving ionic conduction. Also, inorganic compounds such as oxides, nitrides or carbides may be added as the filler for the purposes of preventing hydrogen, alcohol, water or oxygen from permeating through the fuel cell. Exemplary fillers include boron nitride, silicon carbide and silica.

For helping the composition cure, heat polymerization initiators such as azobisisobutyronitrile in the case of heat curing, and photo-polymerization initiators such as benzophenone in the case of UV radiation curing are preferably used.

The method of preparing the liquid curable resin composition is not particularly limited, and it may be prepared by any conventional technique. From the coating aspect, the liquid curable resin composition should have a viscosity of less than or equal to 100,000 mPa·s at 25°C, desirably from 100 to 10,000 mPa·s at 25°C, when measured by a rotation viscometer. A composition with a viscosity of greater than 100,000 mPa·s has poor leveling property and is difficult to form an even, thin coat whereas a composition with a viscosity of less than 100 mPa·s may cause more cissing and become more penetrable into a substrate.

In one embodiment, the liquid curable resin composition of the invention is applied onto a film substrate such as polyester film, polypropylene film, polyethylene film or tetrafluoroethylene film and heated and/or irradiated with ultraviolet radiation (UV) or electron beams (EB) for thereby forming a cured film of the resin composition serving as an electrolyte membrane.

In another embodiment, the liquid curable resin composition is applied onto an electrode such as carbon paper having a metal catalyst such as platinum borne thereon. The coating is heated and/or irradiated with UV or EB to form a cured film serving as an electrolyte membrane. Another electrode is then attached to the cured film to complete an electrolyte membrane/electrode assembly. In an alternative embodiment, the liquid curable resin composition of the invention is applied onto an electrode. Another electrode is attached to the uncured coating. The assembly is then heated and/or irradiated with UV or EB to thereby cure the resin composition, completing an electrolyte membrane/electrode assembly.

In the curing of the liquid curable resin composition of the invention, heating and/or UV or EB irradiation is necessary. It is also possible that the composition be first heated and then irradiated with UV or EB for curing.

In the case of heat curing, the composition is preferably heated at a temperature of at least 80°C, more preferably at least 100°C, for about 1 to 30 minutes, especially about 3 to 10 minutes. Heating the composition at a temperature below 80°C may result in undercure.

In the case of UV curing, an appropriate exposure dose is at least 10 mJ/cm², more desirably 10 to 1,000 mJ/cm², and even more desirably 50 to 500 mJ/cm². An exposure dose of less than 10 mJ/cm² may result in undercure whereas an exposure dose in excess of 1,000 mJ/cm² is uneconomical because of an energy waste and a loss of production efficiency.

In the case of EB curing, the composition is irradiated with EB so as to provide an absorbed dose of at least 5 kGy, more desirably 5 to 500 kGy, and even more desirably 10 to 100 kGy. An absorbed dose of less than 5 kGy may lead to undercure whereas an absorbed dose in excess of 500 kGy may cause decomposition of the resin.

The temperature at which UV or EB is irradiated may be around room temperature. In order to adjust the viscosity of the resin composition so that the composition may be effectively coated, and to produce a coating thereof with a consistent thickness and a consistent surface state, the resin composition and the irradiating atmosphere may be controlled to an appropriate temperature. Desirably, the resin composition and the irradiating atmosphere are controlled to a constant temperature in the range of 25 to 60° C.

The atmosphere in which the resin composition is cured is preferably an inert gas such as nitrogen, helium or argon so that radical polymerization may readily take place. The atmosphere should preferably have an oxygen concentration of up to 500 ppm, more preferably up to 200 ppm.

The cured film or electrolyte membrane typically has a thickness of up to 200 µm, and preferably 1 to 50 µm. A film of more than 200 µm has a greater film resistance when used as the electrolyte membrane in a fuel cell, leading to a reduced output. A film of less than 1 µm may provide a less barrier to hydrogen gas or methanol as the fuel in the fuel cell, leading to a reduced output.

In an embodiment wherein the composition comprising a compound having an ion conductive precursor group is cured, the ion conductive precursor groups in the cured film may be converted to ion conductive groups by suitable treatment. For example, the sulfonic acid metal salt in the cured film is ion exchanged with an acid such as hydrochloric acid or sulfuric acid. The glycidyl group is treated with sodium sulfite or the like to form a sulfonic acid metal salt, which is then treated with an acid.

The electrolyte membrane according to the invention is disposed contiguous to and between first and second electrodes each having a catalyst borne thereon to form an electrolyte membrane/electrode assembly for fuel cells. Specifically, the electrolyte membrane/electrode assembly is prepared by either of the following:
method (i) involving applying a liquid curable resin composition onto a first electrode having a catalyst borne thereon to form a coating, curing the coating to form a cured film by heating and/or UV or EB irradiation, and disposing a second electrode having a catalyst borne thereon contiguous to the cured film, and
method (ii) involving applying a liquid curable resin composition onto a first electrode having a catalyst borne thereon to form a coating, disposing a second electrode having a catalyst borne thereon contiguous to the uncured coating, and curing the coating to form a cured film by heating and/or UV or EB irradiation.

Referring to FIG. 1, method (ii) is illustrated. An air electrode 1 includes a catalyst layer 3 coated on a carbon paper 2. Similarly, a fuel electrode 4 includes a catalyst layer 6 coated on a carbon paper 5. A coating 7 of the resin composition (or an electrolyte membrane resulting from curing thereof) is disposed between the electrodes. For example, the assembly is manufactured by forming the coating 7 on the catalyst layer 6 of the fuel electrode 4, placing the air electrode 1 thereon such that the catalyst layer 3 is contiguous to the coating 7, and then heating and/or applying EB for curing the coating 7, obtaining a cured film or electrolyte membrane.

The electrode having a catalyst borne thereon may be a conventional fuel cell electrode (either fuel electrode or air electrode) on which a catalyst is borne. The construction and material of the electrode may be selected from those well known for fuel cells. The catalyst may also be selected from those well known for fuel cells, for example, platinum base catalysts.

In the above method, a coating of the composition or an electrolyte membrane is joined to electrodes by compression bonding under a force of about 0.05 to 5 kgf/cm² using a press or the like. A firm bond is established between the electrolyte membrane and the electrodes without a need for hot pressing.

The electrolyte membrane and the electrolyte membrane/electrode assembly according to the invention are advantageously used in fuel cells. The fuel cell includes a fuel electrode, an air electrode, and a SPE membrane in thin film form disposed therebetween and tightly bonded thereto. A catalyst layer, a fuel diffusion layer and a separator are disposed on both sides of the SPE membrane to construct a fuel cell having improved power generation.

### EXAMPLE

Examples of the invention are given below together with Comparative Examples by way of illustration and not by way of limitation. It is understood that the number average molecular weight (Mn) is determined by gel permeation chromatography (GPC) with polystyrene standards, and the viscosity is measured by a Brookfield rotational viscometer under conditions: rotor No. 3, 30 rpm and 25°C.

### Example 1

A reactor was charged with 100 g of polytetramethylene glycol having a Mn of 1,000 and 0.1 g of 2,6-di-tert-butylhydroxytoluene. In a nitrogen stream at 65-70°C, 34.8 g of 2,4-tolylene diisocyanate was added dropwise to the reactor. After the completion of dropwise addition, the reactor was kept at 70°C for 2 hours, followed by addition of 0.02 g of dibutyltin dilaurate. In dry air, 23.2 g of 2-hydroxyethyl acrylate was added dropwise. The reactor was kept at 70°C for a further 5 hours, obtaining a polyether urethane acrylate oligomer having a Mn of 1,580 (Oligomer A).

70 parts by weight of Oligomer A was mixed with 30 parts by weight of glycidyl methacrylate and 1.0 part by weight of asobisisobutyronitrile to form a liquid resin composition B having a viscosity of 1,200 mPa·s at 25°C.

Next, using an applicator, the liquid resin composition B was applied onto a glass plate to a build-up of 50 µm. The coating was heated in a nitrogen atmosphere at 100°C for 30 minutes to form a cured film. In an aqueous solution containing 10 g of sodium sulfite, 3 g of sodium hydrogen sulfite, 10 g of isopropyl alcohol and 77 g of water, the film was kept at 80°C for 24 hours for reaction to convert the epoxy groups to sodium sulfonate. Then the film was immersed in 1N hydrochloric acid at room temperature for 3 hours, yielding a film containing sulfonic acid.

The film was immersed in pure water at 25°C for 24 hours, after which it was taken out and wiped on the surface with gauze. Using an impedance/gain-phase analyzer 1260 (Schulumberger Technologies) and platinum plates as the electrodes, a proton conductivity at 25°C was measured to be 0.08 s/cm.

### Example 2

70 parts by weight of Oligomer A (Example 1) was mixed with 30 parts by weight of acrylamide methyl propane sulfonic acid and 120 part by weight of dimethylformamide to form a liquid resin composition C having a viscosity of 100 mPa·s at 25° C.

Next, a 5% isopropyl alcohol solution of Nafion (Aldrich) and carbon having 20 wt% of platinum borne thereon, Vulcan XC72 (E-Tek Inc.) were kneaded to form a paste. Using a wire bar, this catalyst paste was applied onto a carbon paper TGPH090 (Toray Co., Ltd.) so as to give a coating weight of 0.34 mg/cm² of Pt catalyst. The coating was dried in a hot air circulating dryer at 120°C for 5 minutes, forming an electrode (fuel electrode).

Using an applicator, the liquid resin composition C was applied onto this electrode to form a coating having a thickness of about 30 µm. A similarly constructed electrode (air electrode) was disposed on the coating. The three-layer laminate was press bonded by moving a roller at 5 kgf/cm² and room temperature over two back and forth strokes. The three-layer laminate was held in a vacuum dryer at 80°C for 15 minutes. Using an electron beam-emitting system, the three-layer laminate was irradiated with electron beams in a nitrogen atmosphere having an oxygen concentration of 50 ppm, at an accelerating voltage of 300 kV and an absorbed dose of 50 kGy. The liquid resin composition C effectively cured, and the cured film exhibited a firm bond to both the electrodes. As in Example 1, the proton conductivity at 25°C of this cured film was measured to be 0.09 s/cm.

### Example 3

60 parts by weight of Oligomer A (Example 1) was mixed with 40 parts by weight of methacryloxyethyl phosphate to form a liquid resin composition D having a viscosity of 5,000 mPa·s at 25°C.

The liquid resin composition D was irradiated with EB as in Example 2 except that the vacuum drying was omitted. The liquid resin composition D effectively cured, and the cured film exhibited a firm bond to both the electrodes. As in Example 1, the proton conductivity at 25°C of this cured film was measured to be 0.0006 s/cm.

### Comparative Example 1

An ion-exchange membrane having perfluorosulfonate groups, Nafion 112 (trade name, E.I. duPont) was interposed between the fuel electrode (anode) and the air electrode (cathode) which were prepared in Example 2. The stack was press bonded by moving a roller at 5 kgf/cm² and room temperature over two back and forth strokes, but the components did not bond together.

### Comparative Example 2

A 20% alcohol solution of Nafion (Aldrich) was applied onto a fuel electrode (anode) which was prepared in Example 1, and dried at 80°C for 20 minutes, forming an electrolyte membrane having a thickness of about 50 µm. The membrane cracked and partially separated apart from the electrode.

## Claims

1. A liquid curable resin composition for forming an electrolyte membrane, comprising a monomer containing at least one ethylenically unsaturated group and at least one ion conductive group or precursor group thereof in a molecule and having a molecular weight of less than 1,000, and an oligomer containing at least two reactive groups in a molecule in a weight ratio of from 10/90 to 90/10, said composition having a viscosity of 100 to 100,000 mPa·s at 25°C, **characterised in that** the oligomer is a polyether urethane acrylate with a number average molecular weight of 1000 to 4000.

2. The liquid curable resin composition of claim 1, wherein the ion conductive group is a sulfonic acid group.

3. A method for preparing an electrolyte membrane, comprising the steps of:
applying the liquid curable resin composition of claim 1 or 2 onto a substrate to a build-up of to 200 µm, and curing the applied resin composition to form a cured film by heating and/or ultraviolet or electron beam irradiation.

4. A method of claim 3, further comprising the step of converting the ion conductive precursor groups to ion conductive groups.

## Patentansprüche

1. Flüssige härtbare Harzzusammensetzung zur Ausbildung einer Elektrolytmembran, umfassend ein Monomer, das zumindest eine ethylenisch ungesättigte Gruppe und zumindest eine ionenleitende Gruppe oder Vorläufergruppe davon pro Molekül enthält und ein Molekulargewicht von weniger als 1.000 aufweist, und ein Oligomer, das zumindest zwei reaktive Gruppen pro Molekül aufweist, in einem Gewichtsverhältnis von 10:90 bis 90:10, wobei die Zusammensetzung eine Viskosität von 100 bis 100.000 mPa·s bei 25 °C aufweist, **dadurch gekennzeichnet, dass** das Oligomer ein Polyetherurethanacrylat mit einem zahlenmittleren Molekulargewicht von 1000 bis 4000 ist.

2. Flüssige härtbare Harzzusammensetzung nach Anspruch 1, worin die ionenleitende Gruppe eine Sulfonsäuregruppe ist.

3. Verfahren zur Herstellung einer Elektrolytmembran, folgende Schritte umfassend:
Auftragen einer flüssigen härtbaren Harzzusammensetzung nach Anspruch 1 oder 2 auf ein Substrat bis zu einer Höhe von 200 µm und Härten der aufgetragenen Harzzusammensetzung, um einen gehärteten Film zu bilden, durch Erhitzen und/oder Bestrahlung mit UV- oder Elektronenstrahlen.

4. Verfahren nach Anspruch 3, weiters den Schritt des Überführens der ionenleitenden Vorläufergruppen in ionenleitende Gruppen umfassend.

## Revendications

1. Composition de résine liquide durcissable pour la fabrication d'une membrane électrolyte, comprenant un monomère contenant au moins un groupe éthyléniquement insaturé et au moins un groupe à conduction ionique ou un précurseur de celui-ci par molécule et ayant un poids moléculaire inférieur à 1 000, et un oligomère contenant au moins deux groupes réactifs par molécule selon un rapport pondéral de 10/90 à 90/10, ladite composition ayant une viscosité de 100 à 100 000 mPa.s à 25 °C, **caractérisée en ce que** l'oligomère est un polyéther uréthane acrylate ayant un poids moléculaire moyen en nombre de 1 000 à 4 000.

2. Composition de résine liquide durcissable selon la revendication 1, dans laquelle le groupe à conduction ionique est un groupe acide sulfonique.

3. Procédé de préparation d'une membrane électrolyte, comprenant les étapes consistant à
appliquer la composition de résine liquide durcissable selon la revendication 1 ou 2 sur un substrat jusqu'à une épaisseur totale de 200 µm, et durcir la composition de résine appliquée pour former un film durci par chauffage et/ou irradiation par des ultraviolets ou un faisceau électronique.

4. Procédé selon la revendication 3, comprenant en outre l'étape consistant à convertir les groupes précurseurs à conduction ionique en groupes à conduction ionique.
